(19) **Europäisches Patentamt** / **European Patent Office** / **Office européen des brevets**

(11) **EP 4 707 258 A1**

(12) **EUROPEAN PATENT APPLICATION**
published in accordance with Art. 153(4) EPC

(43) Date of publication:
**11.03.2026 Bulletin 2026/11**

(21) Application number: **24818448.3**

(22) Date of filing: **14.05.2024**

(51) International Patent Classification (IPC):
**C04B 28/34** (2006.01)   **H01M 10/0562** (2010.01)
**H01M 10/058** (2010.01)   **H01M 4/62** (2006.01)
**H01M 10/0525** (2010.01)   **C04B 40/02** (2006.01)
**C04B 111/94** (2006.01)

(52) Cooperative Patent Classification (CPC):
Y02E 60/10

(86) International application number:
**PCT/CN2024/093039**

(87) International publication number:
**WO 2024/250915 (12.12.2024 Gazette 2024/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  **05.06.2023  CN 202310656074**

(71) Applicant: **Liongo (Changzhou) New Energy Co., Ltd.**
**Changzhou, Jiangsu 213300 (CN)**

(72) Inventors:
• **LI, Yanfeng**
  **hangzhou, Jiangsu 213300 (CN)**
• **LI, Lifei**
  **hangzhou, Jiangsu 213300 (CN)**
• **JIN, Cheng**
  **hangzhou, Jiangsu 213300 (CN)**
• **ZOU, Kui**
  **hangzhou, Jiangsu 213300 (CN)**
• **ZHU, Chengqi**
  **hangzhou, Jiangsu 213300 (CN)**
• **DI, Weimin**
  **hangzhou, Jiangsu 213300 (CN)**

(74) Representative: **Acapo Onsagers AS**
**Edvard Griegs vei 1**
**5059 Bergen (NO)**

(54) **CORE-SHELL/GLASSY SOLID-STATE ELECTROLYTE, AND PREPARATION METHOD THEREFOR AND USE THEREOF**

(57)     Provided in the present disclosure is a composite material, which comprises $LiAlPO_4(OH)_xF_{1-x}$ and $Al(H_2PO_4)_3$ compounded on the surface of the $LiAlPO_4(OH)_xF_{1-x}$, wherein $0 \leq x \leq 1$. A corresponding core-shell/glassy solid-state electrolyte material is also prepared in the present disclosure. The composite solid electrolyte has good ionic conductivity, good flexibility, a stable composite structure and thermal stability, such that when being applied to positive electrode coating, the composite solid electrolyte can slow down reduction in the capacity of a positive electrode by a coating layer, effectively remove alkaline residual lithium left on the surface in the preparation process of a positive electrode material, and convert the residual lithium into $Li_3PO_4$ favorable for ionic conductivity of the coating layer and $AlPO_4$ capable of protecting the positive electrode. Moreover, $Li_3AlF_6$ is more stable to HF, and the good flexibility of a glassy structure thereof is beneficial to effective interfacial contact between the positive electrode and an electrolyte solution of the electrolyte, such that good interfacial ion conduction is achieved.

FIG. 1

## Description

### CROSS REFERENCE TO RELATED APPLICATIONS

The present invention claims priority to Chinese Patent Application No. 202310656074.X filed with the China National Intellectual Property Administration on June 5, 2023, and entitled "CORE-SHELL/GLASSY SOLID-STATE ELECTROLYTE, AND PREPARATION METHOD THEREFOR AND USE THEREOF", which is incorporated herein by reference in entirety.

### TECHNICAL FIELD

The present invention belongs to the technical field of coating materials for positive electrodes of lithium-ion batteries, and relates to a composite material and use thereof, a core-shell glassy solid-state electrolyte material, a preparation method therefor and use thereof, and a coated positive electrode material for a lithium-ion battery and a preparation method for the coated positive electrode material of the lithium-ion battery.

### BACKGROUND ART

To meet the energy demands of electric vehicles and smart grid societies, extensive research has been conducted on rechargeable batteries with higher energy and power densities. Lithium-ion batteries (LIBs) have exhibited promising prospects for such large-scale battery applications. To ensure sufficient energy density and safe operation conditions of batteries, all-solid-state lithium-ion batteries using non-flammable inorganic solids as electrolytes have attracted widespread attention. Solid-state electrolytes with high $Li^+$ conductivity play a crucial role in achieving high-performance all-solid-state lithium-ion batteries. With the development and research of various solid-state electrolytes, the role of the solid-state electrolytes in rechargeable lithium batteries has become increasingly important. During this period, the application of the solid-state electrolytes is not limited to all-solid-state batteries, while they can further be used as additives in hybrid solid-liquid liquid electrolytes to alleviate various problems in liquid electrolyte applications, as coating materials for separators to improve separator stability and ensure battery safety, and as coating materials for positive and negative electrodes to solve interfacial problems between the positive and negative electrodes and the liquid electrolytes or the electrolytes, suppress lithium dendrite formation through different mechanisms, and improve cycle stability of batteries. In summary, practical applications of the solid-state electrolytes in the lithium-ion batteries require them to have high $Li^+$ conductivity, good electrochemical stability, air stability, and excellent mechanical properties.

Several lithium compounds, such as oxides, sulfides, halides, and polymers, have been reported as promising solid-state electrolyte materials. However, with in-depth research on various compounds, respective drawbacks of various compounds have been revealed, significantly impacting applications of various compounds. In the application of solid-state electrolytes coating positive electrodes, the solid-state electrolytes can act as a physical barrier to suppress side reactions and mitigate transition metal dissolution; improve electronic and ionic conductivity; modify surface chemistry to promote interfacial ion charge transfer; and stabilize structure to reduce phase transition stress. However, coating effects of different solid-state electrolytes have different focuses, and none can perfectly demonstrate all the above technical effects. In addition, coating positive electrodes with the solid-state electrolytes tends to reduce capacity of the positive electrodes. Meanwhile, alkaline residual lithium on the surface during the preparation of positive electrodes can react and generate gas during battery charging and discharging, thus compromising the battery safety. Removal of the surface residual lithium is also one of desired effects that the solid-state electrolytes aim to achieve.

Studies have shown that fluorides have the potential to become novel materials for solid-state electrolytes, as they can substantially meet the practical requirements of the solid-state electrolytes in battery applications. In addition, fluorides are calculated to possess almost the widest electrochemical windows, which can ensure compatibility with high-voltage positive electrodes and low-operating-voltage negative electrodes, and contribute to the improvement in battery energy density. For example, $Li_3AlF_6$ is considered as a quite promising fluoride solid-state $Li^+$ conductor. $Li_3AlF_6$ is a stoichiometric compound of LiF and $AlF_3$ with a molar ratio of 3:1. At room temperature, a crystal structure of $Li_3AlF_6$ is a monoclinic crystal system, known as $\beta$-$Li_3AlF_6$; however, at room temperature, $\beta$-$Li_3AlF_6$ itself exhibits relatively poor $Li^+$ conductivity and limited cycle stability. Reports have demonstrated that glassy amorphous $Li_3AlF_6$ shows significantly improved ionic conductivity and electrochemical performance, but room-temperature properties thereof still fall short of practical application requirements.

Therefore, how to find a more suitable fluoride to solve the above-mentioned problems of $Li_3AlF_6$ has become one of the focuses of widespread interest for many front-line researchers and R&D enterprises in the industry.

In view of this, the present invention is hereby proposed.

## SUMMARY

In view of this, a technical problem to be solved by the present invention is to provide a composite material and use thereof, a core-shell glassy solid-state electrolyte material, a preparation method therefor and use thereof, and a coated positive electrode material for a lithium-ion battery and a preparation method for the coated positive electrode material for the lithium-ion battery. The core-shell glassy solid-state electrolyte material designed and prepared by the present invention can effectively improve surface properties of the positive electrode material, protect the positive electrode material from HF attack, inhibit transition metal dissolution of the positive electrode material, and ensure relatively good electrochemical performance of the positive electrode. In addition, the preparation method is simple and easy to implement, with mild conditions, strong controllability, and good stability, thus being easier for promotion and application in industrial production.

The present invention provides a composite material, including $LiAlPO_4(OH)_xF_{1-x}$ and $Al(H_2PO_4)_3$ compounded on a surface of $LiAlPO_4(OH)_xF_{1-x}$, wherein

$$0 \leq x \leq 1.$$

In other embodiments of the present invention, the composite material has a core-shell structure, wherein

the $LiAlPO_4(OH)_xF_{1-x}$ is a core, and the $Al(H_2PO_4)_3$ is a shell layer;
a thickness of the $Al(H_2PO_4)_3$ shell layer is 10 nm~50 nm;
a particle size of the composite material is 80 nm~600 nm; and
a mass ratio of the $LiAlPO_4(OH)_xF_{1-x}$ to the $Al(H_2PO_4)_3$ is (30~65):(0.5~3).

The present invention provides use of the composite material according to any one of the above technical solutions in a solid-state electrolyte material or a lithium-ion battery.

In other embodiments of the present invention, the solid-state electrolyte material includes a fluorine-based solid-state electrolyte material, wherein

the fluorine-based solid-state electrolyte material includes a glassy fluorine-based solid-state electrolyte material, where
the glassy fluorine-based solid-state electrolyte material includes $Li_3AlF_6$.

The present invention further provides a core-shell glassy solid-state electrolyte material, calculated based on raw materials, including $Li_3AlF_6$ and a composite material compounded in the $Li_3AlF_6$, wherein the composite material includes the composite material according to any one of the above technical solutions.

In other embodiments of the present invention, the $Li_3AlF_6$ is a matrix material in the core-shell glassy solid-state electrolyte material;

the composite material compounded in the $Li_3AlF_6$ is specifically a composite material dispersed in the $Li_3AlF_6$;
a mass ratio of the $Li_3AlF_6$ to the $LiAlPO_4(OH)_xF_{1-x}$ in the composite material is (5~30):(30~65); and
the core-shell glassy solid-state electrolyte material includes a core-shell glassy solid-state electrolyte material for a lithium-ion battery.

In other embodiments of the present invention, the raw materials further include $SiO_2$ or/and $Al_2O_3$, wherein

the $SiO_2$ or/and $Al_2O_3$ is dispersed in the $Li_3AlF_6$;
a mass ratio of the $SiO_2$ or/and $Al_2O_3$ to the $Li_3AlF_6$ is (0.03~0.3):(5~30); and
the lithium-ion battery specifically includes a coating material for a positive electrode material of the lithium-ion battery.

The present invention provides a preparation method for a core-shell glassy solid-state electrolyte material, including steps of:

1) mixing a $LiAlPO_4(OH)_xF_{1-x}$ slurry with $Al(H_2PO_4)_3$ to obtain a slurry, wherein

$$0 \leq x \leq 1;$$

premixing LiF and AlF$_3$, followed by a first sintering to obtain a glassy Li$_3$AlF$_6$ material, and then milling the glassy Li$_3$AlF$_6$ material to obtain a glassy Li$_3$AlF$_6$ powder; and

2) remixing the glassy Li$_3$AlF$_6$ powder obtained in the above step, an SiO$_2$ or/and Al$_2$O$_3$ powder, and the slurry to obtain a mixed slurry; and then subjecting the mixed slurry to vacuum drying to obtain the core-shell glassy solid-state electrolyte material.

In other embodiments of the present invention, the LiAlPO$_4$(OH)$_x$F$_{1-x}$ slurry is obtained by milling the LiAlPO$_4$(OH)$_x$F$_{1-x}$, wherein

a method of the milling includes wet milling;
a rotational speed of the milling is 500 r/min~2500 r/min; and
a duration of the milling is 2 h~10 h.

In other embodiments of the present invention, a duration of the mixing is 30 min~600 min;

a molar ratio of the LiF to the AlF$_3$ is (3.0~3.3):1;
a method of the premixing includes planetary ball mill mixing;
a duration of the premixing is 4 h~12 h; and
a rotational speed of the premixing is 200 r/min~500 r/min.

In other embodiments of the present invention, after the premixing, the method further including a step of drying, wherein

a temperature of the drying is 80 °C~200 °C;
a duration of the drying is 2 h~24 h;
a temperature of the first sintering is 600 °C~950 °C; and
a duration of the first sintering is 5 min~180 min.

In other embodiments of the present invention, after the first sintering, the method further includes a step of quenching, wherein

a method of the quenching includes water quenching or liquid nitrogen cooling; and
a particle size of the glassy Li$_3$AlF$_6$ powder is 100 nm~400 nm.

In other embodiments of the present invention, the remixing specifically is first mixing the glassy Li$_3$AlF$_6$ powder and the slurry, and then further mixing with the SiO$_2$ or/and Al$_2$O$_3$ powder, wherein

a duration of the first mixing is 30 min~300 min;
a duration of the further mixing is 2 h~24 h;
a temperature of the vacuum drying is 100 °C~300 °C; and
a duration of the vacuum drying is 3 h~48 h.

The present invention provides use of the core-shell glassy solid-state electrolyte material according to any one of the above technical solutions or the core-shell glassy solid-state electrolyte material prepared by the preparation method according to any one of the above technical solutions in a lithium-ion battery.

In other embodiments of the present invention, the lithium-ion battery specifically includes a positive electrode material of the lithium-ion battery; and

the use specifically is use as a coating material for the positive electrode material of the lithium-ion battery.

The present invention provides a coated positive electrode material for a lithium-ion battery, including a positive electrode material and the core-shell glassy solid-state electrolyte material coated on the positive electrode material, wherein

the core-shell glassy solid-state electrolyte material includes the core-shell glassy solid-state electrolyte material according to any one of the above technical solutions or the core-shell glassy solid-state electrolyte material prepared by the preparation method according to any one of the above technical solutions.

In other embodiments of the present invention, a mass ratio of the positive electrode material to the core-shell glassy solid-state electrolyte material is 1:(0.02~0.15); and

a coating layer thickness of the core-shell glassy solid-state electrolyte material is 0.6 $\mu$m~1.2 $\mu$m.

The present invention provides a preparation method for a coated positive electrode material for a lithium-ion battery, including steps of:

mixing a positive electrode material, a milled core-shell glassy solid-state electrolyte material, and a solvent, followed by a second sintering, to obtain the coated positive electrode material coated with a core-shell glassy solid-state electrolyte, wherein
the core-shell glassy solid-state electrolyte material includes the core-shell glassy solid-state electrolyte material according to any one of the above technical solutions or the core-shell glassy solid-state electrolyte material prepared by the preparation method according to any one of the above technical solutions.

In other embodiments of the present invention, a powder particle size D50 of the milled core-shell glassy solid-state electrolyte material is 0.4 $\mu$m~1.0 $\mu$m;

specific steps of the mixing include: first subjecting the positive electrode material and the solvent to ultrasonic stirring and dispersion, and then adding the milled core-shell glassy solid-state electrolyte material, followed by stirring and mixing;
the solvent includes anhydrous ethanol and/or N-methylpyrrolidone;
a duration of the ultrasonic stirring and dispersion is 20 min~120 min; and
a duration of the stirring and mixing is 2 h~24 h.

In other embodiments of the present invention, after the mixing, the method further includes a step of drying, wherein

a temperature of the drying is 80 °C~200 °C;
a duration of the drying is 2 h~12 h;
a temperature of the second sintering is 200 °C~400 °C; and
a holding duration of the second sintering is 2 h~12 h.

The present invention achieves, for example, beneficial effects as follows.

The present invention provides a composite material, including $LiAlPO_4(OH)_xF_{1-x}$ and $Al(H_2PO_4)_3$ compounded on the surface of $LiAlPO_4(OH)_xF_{1-x}$, wherein, $0 \leq x \leq 1$. Compared with the prior art, the present invention specifically designs a composite material with a particular composition and structure, and further combines the composite material with materials such as $Li_3AlF_6$ based on a specific ratio and structure, to form the core-shell glassy solid-state electrolyte material.

In the core-shell glassy solid-state electrolyte prepared in the present invention, the core part is composed of $LiAlPO_4(OH)_xF_{1-x}$ material, which assists the positive electrode material in storing lithium ions in application for coating positive electrodes, thus reducing side effects of solid-state electrolyte coating on positive electrode capacity, and also has a relatively high lithium-ion diffusion coefficient and a stable structure; the shell part is composed of $Al(H_2PO_4)_3$ material, where $Al(H_2PO_4)_3$ contains hydrogen bonds, which can provide a robust structure for cementation between one crystal surface and another crystal surface. Both $LiAlPO_4(OH)_xF_{1-x}$ and $Li_3AlF_6$ contain relatively highly electronegative $F^-$ that can bind with hydrogen bonds to obtain a stable core-shell glassy structure, thus improving processability of the solid-state electrolyte. During the heating process, hydrogen bonds still exist and can maintain structural stability. In addition, the shell material $Al(H_2PO_4)_3$ decomposes to produce $Al(PO_3)_3$ during the heating process of the positive electrode coating applications, and $Al(PO_3)_3$ can react with alkaline residual lithium $Li_2CO_3$ or LiOH on the surface of the positive electrode material to produce $Li_3PO_4$ with ionic conductivity and an $AlPO_4$ coating protecting the positive electrode.

In the core-shell glassy solid-state electrolyte prepared in the present invention, the matrix material is $Li_3AlF_6$, and completely glassy $Li_3AlF_6$ is obtained by quenching, thus effectively addressing the problem of poor conductivity of lithium ions in $Li_3AlF_6$ crystal structure. At the same time, when $PO_4^{3-}$ in $LiAlPO_4(OH)_xF_{1-x}$ can migrate into glassy $Li_3AlF_6$ regions, it can play a synergistic role in conduction of lithium ions based on the regional valence conservation, and the $Li_3AlF_6$ material exhibits excellent ionic conductivity. Glassy $Li_3AlF_6$ exhibits relatively good flexibility, which is beneficial for improving interfacial contact between the positive electrode and the electrolyte or liquid electrolytes. Therefore, combination with a relatively good ionic conductivity can effectively improve interfacial performance of the positive electrode. Moreover, $Li_3AlF_6$ itself is a relatively stable material and does not react with HF, enabling it to coat the positive electrode and protect the positive electrode from HF corrosion, and avoiding capacity reduction caused by transition metal dissolution of the positive electrode. In addition, $Li_3AlF_6$ has a relatively high electrochemical window, which can ensure the use of high-voltage positive electrode without decomposition. At the same time, the core-shell glassy solid-state electrolyte includes trace amounts of glassy stabilizing compounds $SiO_2$ or/and $Al_2O_3$ material, which can act as a glassy "skeleton", thus reducing crystallization tendency of glassy state during sintering process in the positive electrode coating process, and improving chemical stability and thermal stability of glass.

The core-shell glassy composite solid-state electrolyte provided in the present invention possesses excellent ionic conductivity, good flexibility, stable composite structure, and thermal stability. When the solid-state electrolyte is applied for coating positive electrodes, it can mitigate the reduction in positive electrode capacity caused by the coating layer, which is not possessed by other positive electrode coating layers. Compared with other solid-state electrolytes as positive electrode coating materials, the core-shell glassy composite solid-state electrolyte provided in the present invention can effectively remove alkaline residual lithium on the surface during preparation process of the positive electrode material, by converting the residual lithium into $Li_3PO_4$, which contributes to the ionic conductivity of the coating layer, and $AlPO_4$, which has a protective effect on the positive electrode. In addition, the $Li_3AlF_6$ in the solid-state electrolyte prepared in the present invention is more stable to HF than other positive electrode coating materials, and excellent flexibility of glassy structure thereof facilitates effective interfacial contact between the positive electrode and the electrolyte and liquid electrolytes, achieving good interfacial ion conduction, which is rarely found in other positive electrode coating layers. Therefore, the core-shell glassy composite solid-state electrolyte prepared in the present invention is capable of achieving multiple technical effects that are unattainable with other coating layers in the positive electrode coating applications.

## BRIEF DESCRIPTION OF DRAWINGS

In order to more clearly illustrate technical solutions of embodiments of the present invention, drawings that need to be used in the embodiments will be briefly introduced below. It should be understood that the following drawings only show some embodiments of the present invention and should not be considered as a limitation of the scope. Those ordinarily skilled in the art could also obtain other drawings based on these drawings without using any inventive efforts.

FIG. 1 is a schematic diagram of a core-shell glassy solid-state electrolyte provided by the present invention; and
FIG. 2 is a scanning electron microscopy (SEM) image of a core-shell glassy solid-state electrolyte prepared in Example 1 of the present invention.

## DETAILED DESCRIPTION OF EMBODIMENTS

Endpoints and any values of ranges disclosed herein are not limited to precise ranges or values, and the ranges or values should be understood to include values close to these ranges or values. For numerical ranges, endpoint values of various ranges, endpoint values of various ranges and individual point values, and individual point values can be combined with each other to obtain one or more new numerical ranges, which should be considered as specifically disclosed herein.

To further understand the present invention, optional embodiments of the present invention are described below in conjunction with examples. However, it should be understood that this description is only for further illustrating features and advantages of the present invention and not for limiting patent claims of the present invention.

All raw materials of the present invention are not particularly limited in their sources, and they can be purchased commercially or prepared according to conventional methods known to those skilled in the art.

All raw materials of the present invention are not particularly limited in their purities, and the present invention optionally employs commercial purity or conventional purity in the field of lithium-ion solid-state electrolyte preparation.

The present invention provides a composite material, including $LiAlPO_4(OH)_xF_{1-x}$ and $Al(H_2PO_4)_3$ compounded on a surface of the $LiAlPO_4(OH)_xF_{1-x}$, wherein

$$0 \leq x \leq 1.$$

In the present invention, the x can be $0 \leq x \leq 1$, or $0.2 \leq x \leq 0.8$, or $0.4 \leq x \leq 0.6$.

In the present invention, the composite material optionally has a core-shell structure.

In the present invention, the $LiAlPO_4(OH)_xF_{1-x}$ is optionally a core, and the $Al(H_2PO_4)_3$ is optionally a shell layer.

In the present invention, a thickness of the $Al(H_2PO_4)_3$ shell layer is optionally 10 nm~50 nm, more optionally 15 nm~45 nm, more optionally 20 nm~40 nm, and more optionally 25 nm~35 nm.

In the present invention, a particle size of the composite material is optionally 80 nm~600 nm, more optionally 150 nm~500 nm, and more optionally 250 nm~400 nm.

In the present invention, a mass ratio of the $LiAlPO_4(OH)_xF_{1-x}$ to the $Al(H_2PO_4)_3$ is optionally (30~65):(0.5~3), more optionally (40~55):(0.5~3), and more optionally (30~65):(1.5~2).

The present invention provides use of the composite material according to any one of the above technical solutions in a solid-state electrolyte material or a lithium-ion battery.

In the present invention, the solid-state electrolyte material optionally includes, but is not limited to a fluorine-based solid-state electrolyte material.

In the present invention, the fluorine-based solid-state electrolyte material optionally includes, but is not limited to, a glassy fluorine-based solid-state electrolyte material.

In the present invention, the glassy fluorine-based solid-state electrolyte material optionally includes, but is not limited to, $Li_3AlF_6$.

The present invention provides a core-shell glassy solid-state electrolyte material, calculated based on raw materials, including $Li_3AlF_6$ and a composite material compounded in the $Li_3AlF_6$.

In the present invention, the composite material optionally includes the composite material according to any one of the above technical solutions.

In the present invention, the $Li_3AlF_6$ is optionally a matrix material in the core-shell glassy solid-state electrolyte material.

In the present invention, the composite material compounded in the $Li_3AlF_6$ is specifically optionally a composite material dispersed in the $Li_3AlF_6$.

In the present invention, a mass ratio of the $Li_3AlF_6$ to the $LiAlPO_4(OH)_xF_{1-x}$ in the composite material is optionally (5~30):(30~65), more optionally (10~25):(30~65), and more optionally (10~20):(40~55).

In the present invention, the core-shell glassy solid-state electrolyte material optionally includes a core-shell glassy solid-state electrolyte material for a lithium-ion battery.

In the present invention, the raw materials of the core-shell glassy solid-state electrolyte material according to the above technical solutions further optionally includes $SiO_2$ or/and $Al_2O_3$.

In the present invention, the $SiO_2$ or/and $Al_2O_3$ is optionally dispersed in the $Li_3AlF_6$.

In the present invention, a mass ratio of the $SiO_2$ or/and $Al_2O_3$ to the $Li_3AlF_6$ is optionally (0.03~0.3):(5~30), more optionally (0.08~0.25):(5~30), more optionally (0.1~0.2):(10~25), and more optionally (0.12~0.18):(10~20).

In the present invention, the lithium-ion battery specifically optionally includes a coating material for a positive electrode material of the lithium-ion battery.

The present invention provides a preparation method for a core-shell glassy solid-state electrolyte material, including steps of:

1) mixing a $LiAlPO_4(OH)_xF_{1-x}$ slurry with $Al(H_2PO_4)_3$ to obtain a slurry, wherein

$$0 \leq x \leq 1;$$

premixing LiF and $AlF_3$, followed by a first sintering to obtain a glassy $Li_3AlF_6$ material, and then milling the glassy $Li_3AlF_6$ material to obtain a glassy $Li_3AlF_6$ powder; and

2) remixing the glassy $Li_3AlF_6$ powder obtained in the above step, an $SiO_2$ or/and $Al_2O_3$ powder, and the slurry to obtain a mixed slurry; and then subjecting the mixed slurry to vacuum drying to obtain the core-shell glassy solid-state electrolyte material.

In the present invention, the $LiAlPO_4(OH)_xF_{1-x}$ slurry and the $Al(H_2PO_4)_3$ are first mixed to obtain a mixed slurry, wherein

$$0 \leq x \leq 1.$$

LiF and $AlF_3$ are premixed, and subjected to drying and the first sintering to obtain the glassy $Li_3AlF_6$ material, which is then milled to obtain the glassy $Li_3AlF_6$ powder.

In the present invention, the $LiAlPO_4(OH)_xF_{1-x}$ slurry is optionally obtained by milling the $LiAlPO_4(OH)_xF_{1-x}$.

In the present invention, a method of the milling optionally includes, but is not limited to, wet milling.

In the present invention, a rotational speed of the milling is optionally 500 r/min~2500 r/min, more optionally 900 r/min~2100 r/min, and more optionally 1300 r/min~1700 r/min.

In the present invention, a duration of the milling is optionally 2 h~10 h, more optionally 3 h~9 h, more optionally 4 h~8 h, and more optionally 5 h~7 h.

In the present invention, a molar ratio of the LiF to the $AlF_3$ is optionally (3.0~3.3):1, more optionally (3.05~3.25):1, and more optionally (3.1~3.2):1.

In the present invention, a method of the premixing optionally includes, but is not limited to, planetary ball mill mixing.

In the present invention, a duration of the premixing is optionally 4 h~12 h, more optionally 4 h~11 h, more optionally 5 h~10 h, more optionally 6 h~9 h, and more optionally 7 h~8 h.

In the present invention, a rotational speed of the premixing is optionally 200 r/min~500 r/min, more optionally 250 r/min~450 r/min, and more optionally 300 r/min~400 r/min.

In the present invention, a temperature of the drying is optionally 80 °C~200 °C, more optionally 100 °C~180 °C, and more optionally 120 °C~160 °C.

In the present invention, a duration of the drying is optionally 2 h~24 h, more optionally 5 h~20 h, and more optionally 10 h ~15 h.

In the present invention, a temperature of the first sintering is optionally 600 °C~950 °C, more optionally 700 °C~900 °C, and more optionally 750 °C~800 °C.

In the present invention, a duration of the first sintering is optionally 5 min~180 min, more optionally 15 min~120 min, and more optionally 30 min~80 min.

In the present invention, after the first sintering, the method further optionally includes a step of quenching.

In the present invention, a method of the quenching optionally includes, but is not limited to, water quenching or liquid nitrogen cooling.

In the present invention, a particle size of the glassy $Li_3AlF_6$ powder is optionally 100 nm~400 nm, more optionally 150 nm~350 nm, and more optionally 200 nm~300 nm.

Finally, in the present invention, the glassy $Li_3AlF_6$ powder obtained in the above step, the $SiO_2$ or/and $Al_2O_3$ powder, and mixture are remixed to obtain a mixed slurry, which is subjected to sintering, yielding the core-shell glassy solid-state electrolyte material.

In the present invention, the remixing specifically optionally includes first mixing the glassy $Li_3AlF_6$ powder and the slurry, and then further mixing with the $SiO_2$ or/and $Al_2O_3$ powder.

In the present invention, a duration of the first mixing is optionally 30 min~300 min, more optionally 80 min~250 min, and more optionally 120 min~200 min.

In the present invention, a duration of the further mixing is optionally 2 h~24 h, more optionally 7 h~20 h, and more optionally 12 h~15 h.

In the present invention, a temperature of the vacuum drying is optionally 100 °C~300 °C, more optionally 140 °C~260 °C, and more optionally 180 °C~220 °C.

In the present invention, a duration of the vacuum drying is optionally 3 h~48 h, more optionally 13 h~38 h, and more optionally 23 h to 28 h.

In the present invention, the sintering step finally employed does not affect overall composition or proportion of the material. The composition and proportion of the raw materials in the preparation method can be considered as the composition and proportion of the final core-shell glassy solid-state electrolyte material.

The present invention provides use of the core-shell glassy solid-state electrolyte material according to any one of the above technical solutions or the core-shell glassy solid-state electrolyte material prepared by the preparation method according to any one of the above technical solutions in a lithium-ion battery.

In the present invention, the lithium-ion battery specifically optionally includes a positive electrode material of the lithium-ion battery.

In the present invention, the use is specifically optionally a use as a coating material for the positive electrode material of the lithium-ion battery.

The present invention provides a coated positive electrode material for a lithium-ion battery, including a positive electrode material and a core-shell glassy solid-state electrolyte material coated on the positive electrode material.

In the present invention, the core-shell glassy solid-state electrolyte material includes the core-shell glassy solid-state electrolyte material according to any one of the above technical solutions or the core-shell glassy solid-state electrolyte material prepared by the preparation method according to any one of the above technical solutions.

In the present invention, in the coated positive electrode material for the lithium-ion battery in the above technical solution, a mass ratio of the positive electrode material to the core-shell glassy solid-state electrolyte material is optionally 1:(0.02~0.15), more optionally 1:(0.05~0.13), and more optionally 1:(0.08~0.10).

In the present invention, a coating layer thickness of the core-shell glassy solid-state electrolyte material is optionally 0.6 $\mu$m~1.2 $\mu$m, more optionally 0.8 $\mu$m~1.1 $\mu$m, and more optionally 0.9 $\mu$m~1.0 $\mu$m.

The present invention provides a preparation method for a coated positive electrode material for a lithium-ion battery, including steps of:

mixing a positive electrode material, a milled core-shell glassy solid-state electrolyte material, and a solvent, followed by a second sintering, to obtain the coated positive electrode material coated with a core-shell glassy solid-state electrolyte.

In the present invention, the core-shell glassy solid-state electrolyte material includes the core-shell glassy solid-state electrolyte material according to any one of the above technical solutions or the core-shell glassy solid-state electrolyte material prepared by the preparation method according to any one of the above technical solutions.

In the present invention, a powder particle size D50 of the milled core-shell glassy solid-state electrolyte material is optionally 0.4 $\mu$m~1.0 $\mu$m, more optionally 0.6 $\mu$m~0.9 $\mu$m, and more optionally 0.7 $\mu$m~0.8 $\mu$m.

In the present invention, specific steps of the mixing optionally include: first subjecting the positive electrode material and the solvent to ultrasonic stirring and dispersion, and then adding the milled core-shell glassy solid-state electrolyte material, followed by stirring and mixing.

In the present invention, the solvent optionally includes anhydrous ethanol and/or N-methylpyrrolidone, more optionally anhydrous ethanol or N-methylpyrrolidone.

In the present invention, a duration of the ultrasonic stirring and dispersion is optionally 20 min~120 min, more optionally 40 min~100 min, and more optionally 60 min~80 min.

In the present invention, a duration of the stirring and mixing is optionally 2 h~24 h, more optionally 7 h~20 h, and more optionally 11 h~16 h.

In the present invention, after the mixing, the method further optionally includes a step of drying.

In the present invention, a temperature of the drying is optionally 80 °C~200 °C, more optionally 100 °C~180 °C, and more optionally 120 °C~160 °C.

In the present invention, a duration of the drying is optionally 2 h~12 h, more optionally 4 h~10 h, and more optionally 6 h~8 h.

In the present invention, a temperature of the second sintering is 200 °C~400 °C, more optionally 250 °C~350 °C, and more optionally 280 °C~330 °C.

In the present invention, a holding duration of the second sintering is 2 h~12 h, more optionally 4 h~10 h, and more optionally 6 h~8 h.

In the present invention, to complete and refine overall technical solutions, better ensure the structure and composition of the composite material and the core-shell glassy solid-state electrolyte material, and further improve performance in subsequent applications, the core-shell glassy solid-state electrolyte, the preparation method, and use in the above can specifically include the following contents.

Material preparation:

1. Commercial $LiAlPO_4(OH)_xF_{1-x}$ material is selected. $LiAlPO_4(OH)_xF_{1-x}$ is milled into a nanoscale slurry using sand milling technology. Subsequently, an $Al(H_2PO_4)_3$ binder is added and mechanically stirred to effectively bind it to the surface of $LiAlPO_4(OH)_xF_{1-x}$ particles.

Specifically, the selected amblygonite-type material is $LiAlPO_4(OH)_xF_{1-x}$ $(0 \leq x \leq 1)$.

Specifically, the sand milling equipment used in the selected sand milling technology is a sand mill.

Specifically, the selected milling media are deionized water, anhydrous ethanol, and N-methylpyrrolidone (NMP).

Specifically, the selected milling balls are zirconia balls, and the diameter of the milling balls is 0.05 mm~0.7 mm.

Specifically, the selected rotational speed of the milling is 500 r/min~2500 r/min, and the milling duration is 2 h~10 h.

Specifically, the selected mechanical stirring duration is 30 min~600 min.

Specifically, the selected particle size of the materials after stirring is 80 nm~600 nm.

2. LiF and $AlF_3$ are weighed at a molar ratio of 3:1, and mixed using a planetary ball mill. Mixed slurry is dried in a drying oven, and then dried powder is held at temperature and subjected to first sintering in a muffle furnace. After the holding is completed, resultant is quenched and cooled to room temperature, yielding the glassy $Li_3AlF_6$ material.

Specifically, the ratio of the selected ball milling media to the powder is 3:1.

Specifically, the selected ball milling media are: deionized water and anhydrous ethanol.

Specifically, the selected milling balls are zirconia balls.

Specifically, the selected diameter of the milling balls is 3 mm.

Specifically, the selected duration of the ball milling is 4 h~12 h, the rotational speed of the ball milling is 200 r/min~500 r/min, and the ball-to-material ratio is 10.

Specifically, the selected temperature of the drying is 80 °C~200 °C, and the duration of the drying is 2 h~24 h.

Specifically, the selected temperature of the first sintering is 600 °C~950 °C, and the holding duration is 5 min~180 min.

Specifically, the selected quenching methods are water cooling and liquid nitrogen cooling.

3. The glassy $Li_3AlF_6$ material obtained in step 2 is milled and sieved through a 400-mesh sieve to obtain a powder. The powder is added to the slurry obtained in step 1 for further mechanical stirring for 30 min~300 min. Then the $SiO_2$ or/and $Al_2O_3$ powder is added for further mechanical stirring for 2 h-24 h to obtain the mixed slurry.

4. The mixed slurry obtained in step 3 is subjected to vacuum drying in a vacuum sintering furnace, yielding a core-shell glassy solid-state electrolyte.

Specifically, the vacuum drying is carried out at the temperature of 100 °C-300 °C for 3 h-48 h.

In the core-shell glassy solid-state electrolyte provided in the present invention, the core structure $LiAlPO_4(OH)_xF_{1-x}$ accounted for 30-65 wt.%, the shell structure $Al(H_2PO_4)_3$ accounted for 0.5-3 wt.%, the glassy $Li_3AlF_6$ accounted for 5-30 wt.%, and the additive $SiO_2$ or/and $Al_2O_3$ accounted for 0.03-0.3 wt.%.

The present invention further provides a coated positive electrode material for a lithium-ion battery.

Positive electrode material coating

1. The core-shell glassy solid-state electrolyte powder obtained in above step 4 is milled and sieved through the 400-mesh sieve. Commercial positive electrode material is selected and added to the solvent, followed by ultrasonic stirring and dispersion. Then, the 400-mesh core-shell glassy solid-state electrolyte is added and subjected to mechanical stirring. Uniformly stirred slurry is dried in a forced-air drying oven. Dried powder is then sintered in the muffle furnace. After holding is completed, the resultant is cooled to room temperature with the furnace to obtain a positive electrode material coated with the core-shell glassy solid-state electrolyte.

Specifically, the selected solvents are anhydrous ethanol and N-methylpyrrolidone (NMP).

Specifically, the selected duration of the ultrasonic stirring and dispersion is 20 min~120 min, and the selected duration of the mechanical stirring is 2 h~24 h.

Specifically, the selected temperature of the drying is 80 °C~200 °C, and the duration of the drying is 2 h~12 h.

Specifically, the selected temperature of the sintering is 200 °C~400 °C, and the selected holding duration is 2 h~12 h.

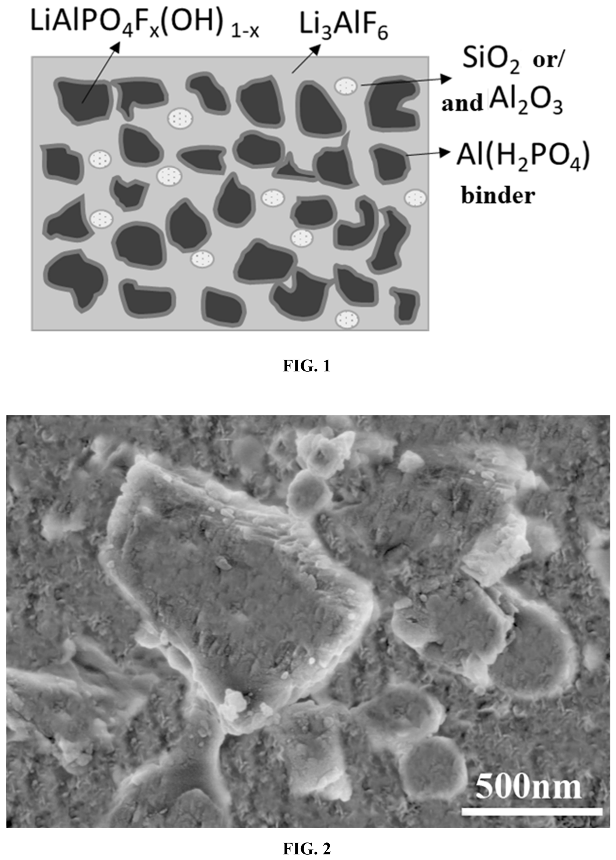

Referring to FIG. 1, FIG. 1 is a schematic diagram of the core-shell glassy solid-state electrolyte provided by the present invention.

The above contents of the present invention provide a composite material and use thereof, a core-shell glassy solid-state electrolyte material, a preparation method therefor, and use thereof, and a coated positive electrode material for a lithium-ion battery and a preparation method for the coated positive electrode material for the lithium-ion battery. By adding a glassy $\beta$-$Li_3AlF_6$ fluoride to conductive particles with a core-shell structure composed of a binder and a lithium-rich material, the present invention forms a core-shell glassy fluorine-based solid-state electrolyte material, whose application to positive electrode coating can achieve multiple beneficial technical effects. The present invention selects $LiAlPO_4(OH)_xF_{1-x}$ material as a lithium-containing material, which belongs to the polyanionic type crystal, offers superior structural stability to transition metal oxide materials and higher lithium-ion diffusion rate than olivine-type materials, and also has a certain specific capacity. At the same time, $Al(H_2PO_4)_3$ material is selected as the binder, and the binder is coated on the surface of the lithium-containing material to form a core-shell structure, which is then mixed with the glassy $Li_3AlF_6$ material, yielding the core-shell glassy solid-state electrolyte with good binding property.

The $LiAlPO_4(OH)_xF_{1-x}$ selected in the present invention is an excellent lithium-ion host material. In the positive electrode coating applications, it assists the positive electrode material in storing lithium ions, thus reducing the influence on reduction in positive electrode capacity caused by solid-state electrolyte coating, and enables free lithium-ion intercalation and deintercalation along three directions of a, b, and c axes, thus rendering a relatively high lithium-ion diffusion coefficient and a relatively stable structure.

The present invention uses $Al(H_2PO_4)_3$ as the binder. $Al(H_2PO_4)_3$ contains tetrahedral $PO_4^{3-}$ groups and internal hydrogen bonds. The hydrogen bonds can provide a robust structure for cementation between one crystal surface and another crystal surface. The $LiAlPO_4(OH)_xF_{1-x}$ and $Li_3AlF_6$ on both sides of the binder both contain relatively highly electronegative $F^-$ that has a strong ability to bind with hydrogen bonds. Therefore, $Al(H_2PO_4)_3$ can firmly adhere to the surfaces of $LiAlPO_4(OH)_xF_{1-x}$ and the glassy $Li_3AlF_6$ through hydrogen bonds, making them closely connected, obtaining a stable core-shell glassy structure and improving processability of the solid-state electrolyte. During heating process, $Al(H_2PO_4)_3$ forms an amorphous, glassy, mosaic (interpenetrating) structure, in which case the hydrogen bonds still exist and can maintain structural stability. During the heating process, $Al(H_2PO_4)_3$ decomposes to produce $Al(PO_3)_3$. $Al(PO_3)_3$ can react with alkaline residual lithium $Li_2CO_3$ or LiOH on the surface of the positive electrode material to generate $Li_3PO_4$ with ionic conductivity and an $AlPO_4$ coating protecting the positive electrode. When negatively charged phosphate ions migrate into the glassy $Li_3AlF_6$ region, they can play a synergistic role in the conduction of lithium ions based on the regional valence conservation.

The present invention uses $Li_3AlF_6$ material as the solid-state electrolyte. However, $Li^+$ has relatively poor conductivity in $Li_3AlF_6$ crystal structure, showing a relatively low ionic conductivity. Some studies have reported that high-energy ball milling amorphization is conducive to improving the conductivity of $Li_3AlF_6$, but the degree of amorphization is not thorough, and the ionic conductivity still has a considerable gap compared with other types of solid-state electrolytes. The present invention utilizes rapid cooling via quenching to obtain completely amorphous $Li_3AlF_6$, and simultaneously

adds $LiAlPO_4(OH)_xF_{1-x}$ with lithium diffusion capability as the core to form the solid-state electrolyte, which can effectively address the problem of low lithium-ion conductivity in the application of $Li_3AlF_6$ solid-state electrolyte. Glassy state typically exhibits relatively good flexibility, which is conducive to improving the interfacial contact between the positive electrode and the electrolyte or liquid electrolytes. Therefore, combination with a relatively good ionic conductivity can effectively improve the interfacial performance of the positive electrode. Furthermore, $Li_3AlF_6$ itself is a relatively stable material and does not react with HF, thus protecting the positive electrode from HF corrosion and avoiding capacity reduction caused by transition metal dissolution of the positive electrode. In addition, $Li_3AlF_6$ has a relatively high electrochemical window, ensuring the use of high-voltage positive electrode.

In the core-shell glassy solid-state electrolyte, trace amounts of glassy stabilizing compounds $SiO_2$ or/and $Al_2O_3$ are introduced. On the one hand, $SiO_2$ can act as a glassy "skeleton", reducing crystallization tendency of the glassy state during sintering process in the positive electrode coating process, and improving the chemical stability and thermal stability of glass. On the other hand, $SiO_2$ or/and $Al_2O_3$ can enhance the thermal stability of $Al(H_2PO_4)_3$.

The core-shell glassy solid-state electrolyte disclosed in the present invention is optionally used for positive electrode coating, which can mitigate the side effects of solid-state electrolytes on the positive electrode capacity, while effectively solving the problem of residual lithium on the surface during preparation process of the positive electrode material, effectively improving surface properties of the positive electrode material, protecting the positive electrode material from HF attack, inhibiting transition metal dissolution of the positive electrode material, and ensuring relatively good electrochemical performance of the positive electrode.

To further illustrate the present invention, the following provides a detailed description of a composite material and use thereof, a core-shell glassy solid-state electrolyte material, a preparation method therefor and use thereof, and a coated positive electrode material for a lithium-ion battery and a preparation method for the coated positive electrode material for the lithium-ion battery provided in the present invention in conjunction with embodiments. However, it should be understood that these embodiments are implemented based on the technical solutions of the present invention, and provide detailed implementation methods and specific operating procedures, only for further illustrating the features and advantages of the present invention, not for limiting the claims of the present invention. The scope of protection of the present invention is not limited to the following embodiments.


**Example 1**

800 g of deionized water as solvent was added to the sand mill. 200 g of commercial $LiAlPO_4(OH)_{0.5}F_{0.5}$ was weighed and added for sand milling. The milling balls used in the sand mill were zirconia balls with a diameter of 0.3 mm. The rotational speed of the sand mill was set to 500 r/min, and the duration of the milling was 10 h. Subsequently, the slurry was added to the beaker and mechanically stirred for 20 min, then 3.34 g of $Al(H_2PO_4)_3$ was added, and stirring was continued for 600 min to obtain the slurry of lithium-containing material with a core-shell structure. The obtained composite material had a particle size of 600 nm.

24.05 g of LiF and 25.95 g of $AlF_3$ were weighed and mixed in the planetary ball mill. 150 g of deionized water was added as solvent for mixing. The zirconium balls used for ball milling were 3 mm zirconia balls, and the mass of the added milling balls was 500 g. The ball milling was carried out at the rotational speed of 500 r/min for 4 h. The slurry after the ball milling was dried in the drying oven at 200 °C for 2 h to obtain the precursor. After milling, the precursor was placed in a covered crucible and sintered in the muffle furnace at the temperature of 600 °C for 180 min. After the holding was completed, the crucible was taken out at high temperature and subjected to the quenching treatment via cold water spraying. After cooling to room temperature, the glassy $Li_3AlF_6$ material was obtained. The $Li_3AlF_6$ powder had a particle size of 400 nm.

The glassy $Li_3AlF_6$ materials prepared in multiple batches were milled and sieved through the 400-mesh sieve. 33.3 g of powder was added to the slurry of lithium-containing material with a core-shell structure obtained by stirring, and stirring was continued for 30 min. Then, 0.2 g of $SiO_2$ was added, and stirring was continued for 2 h to obtain the mixed slurry.

The mixed slurry was dried in the vacuum drying oven to obtain the core-shell glassy solid-state electrolyte, where the powder had a particle size D50 of 1.0 $\mu$m and a shell layer thickness of 50 nm. During the drying process, a vacuum environment was continuously maintained, and the drying was carried out at the temperature of 100 °C for 48 h.

The prepared core-shell glassy solid-state electrolyte powder was milled and sieved through the 400-mesh sieve. 18 g of commercial $LiCoO_2$ was added to 120 ml of anhydrous ethanol and ultrasonically dispersed for 20 min. Then, 0.36 g of the prepared solid-state electrolyte was added and mechanically stirred for 24 h. Well-stirred slurry was dried in the forced-air drying oven at 80 °C for 12 h. The dried powder was then sintered in the muffle furnace to obtain the positive electrode material coated with the core-shell glassy solid-state electrolyte, wherein the coating layer thickness was 1.2 $\mu$m, the sintering temperature was 200 °C, and the holding duration was 12 h.

Referring to FIG. 2, FIG. 2 is an SEM image of the core-shell glassy solid-state electrolyte prepared in Example 1 of the present invention.

**Example 2**

750 g of deionized water as solvent was added to the sand mill. 250 g of commercial $LiAlPO_4(OH)_{0.3}F_{0.7}$ was weighed and added for sand milling. The milling balls used in the sand mill were zirconia balls with a diameter of 0.1 mm. The rotational speed of the sand mill was set to 2500 r/min, and the duration of the milling was 2 h. Subsequently, the slurry was added to the beaker and mechanically stirred for 40 min, then 11.54 g of $Al(H_2PO_4)_3$ was added, and stirring was continued for 30 min to obtain the slurry of lithium-containing material with a core-shell structure. The obtained composite material had a particle size of 80 nm.

26.45 g of LiF and 25.95 g of $AlF_3$ were weighed and mixed in the planetary ball mill. 150 g of deionized water was added as solvent for mixing. The zirconium balls used for ball milling were 3 mm zirconia balls, and the mass of the added milling balls was 500 g. The ball milling was carried out at the rotational speed of 200 r/min for 12 h. The slurry after the ball milling was dried in the drying oven at 80 °C for 24 h to obtain the precursor. After milling, the precursor was placed in a covered crucible and sintered in the muffle furnace at the temperature of 950 °C for 15 min. After the holding was completed, the crucible was taken out at high temperature and subjected to the quenching treatment via liquid nitrogen spraying. After cooling to room temperature, the glassy $Li_3AlF_6$ material was obtained. The $Li_3AlF_6$ powder had a particle size of 100 nm.

The glassy $Li_3AlF_6$ materials prepared in multiple batches were milled and sieved through the 400-mesh sieve. 115.38 g of powder was added to the slurry of lithium-containing material with a core-shell structure obtained by stirring, and stirring was continued for 300 min. Then, 1.15 g of $SiO_2$ was added, and stirring was continued for 24 h to obtain the mixed slurry.

The mixed slurry was dried in the vacuum drying oven to obtain the core-shell glassy solid-state electrolyte, where the powder had a particle size D50 of 0.4 $\mu$m and a shell layer thickness of 10 nm. During the drying process, a vacuum environment was continuously maintained, and the drying was carried out at the temperature of 300 °C for 3 h.

The prepared core-shell glassy solid-state electrolyte powder was milled and sieved through the 400-mesh sieve. 19.5 g of commercial $LiCoO_2$ was added to 120 ml of NMP and ultrasonically dispersed for 120 min. Then, 2.9 g of the prepared solid-state electrolyte was added and mechanically stirred for 2 h. The well-stirred slurry was dried in the forced-air drying oven at 200 °C for 2 h. The dried powder was then sintered in the muffle furnace to obtain the positive electrode material coated with the core-shell glassy solid-state electrolyte, wherein the coating layer thickness was 0.4 $\mu$m, the sintering temperature was 400 °C, and the holding duration was 2 h.

**Example 3**

800 g of anhydrous ethanol as solvent was added to the sand mill. 200 g of commercial $LiAlPO_4(OH)$ was weighed and added for sand milling. The milling balls used in the sand mill were zirconia balls with a diameter of 0.05 mm. The rotational speed of the sand mill was set to 2000 r/min, and the duration of the milling was 5 h. Subsequently, the slurry was added to the beaker and mechanically stirred for 20 min, then 20 g of $Al(H_2PO_4)_3$ was added, and stirring was continued for 500 min to obtain the slurry of lithium-containing material with a core-shell structure. The obtained composite material had a particle size of 400 nm.

24.85 g of LiF and 25.95 g of $AlF_3$ were weighed and mixed in the planetary ball mill. 150 g of anhydrous ethanol was added as solvent for mixing. The zirconium balls used for ball milling were 3 mm zirconia balls, and the mass of the added milling balls was 500 g. The ball milling was carried out at the rotational speed of 350 r/min for 6 h. The slurry after the ball milling was dried in the drying oven at 100 °C for 12 h to obtain the precursor. After milling, the precursor was placed in a covered crucible and sintered in the muffle furnace at the temperature of 700 °C for 20 min. After the holding was completed, the crucible was taken out at high temperature and subjected to the quenching treatment via liquid nitrogen spraying. After cooling to room temperature, the glassy $Li_3AlF_6$ material was obtained. The $Li_3AlF_6$ powder had a particle size of 100 nm.

The glassy $Li_3AlF_6$ materials prepared in multiple batches were milled and sieved through the 400-mesh sieve. 100 g of powder was added to the slurry of lithium-containing material with a core-shell structure obtained by stirring, and stirring was continued for 20min. Then, 1.0 g of $SiO_2$ was added, and stirring was continued for 12 h to obtain the mixed slurry.

The mixed slurry was dried in the vacuum drying oven to obtain the core-shell glassy solid-state electrolyte, where the powder had a particle size D50 of 0.6 $\mu$m and a shell layer thickness of 20 nm. During the drying process, a vacuum environment was continuously maintained, and the drying was carried out at the temperature of 200 °C for 24 h.

The prepared core-shell glassy solid-state electrolyte powder was milled and sieved through the 400-mesh sieve. 19.3 g of commercial $LiCoO_2$ was added to 120 ml of anhydrous ethanol and ultrasonically dispersed for 40 min. Then, 0.97 g of the prepared solid-state electrolyte was added and mechanically stirred for 12 h. The well-stirred slurry was dried in the forced-air drying oven at 100 °C for 10 h. The dried powder was then sintered in the muffle furnace to obtain the positive electrode material coated with the core-shell glassy solid-state electrolyte, wherein the coating layer thickness

was 0.8 μm, the sintering temperature was 300 °C, and the holding duration was 10 h.

**Example 4**

850 g of NMP as solvent was added to the sand mill. 150 g of commercial $LiAlPO_4F$ was weighed and added for sand milling. The milling balls used in the sand mill were zirconia balls with a diameter of 0.7 mm. The rotational speed of the sand mill was set to 600 r/min, and the duration of the milling was 9 h. Subsequently, the slurry was added to the beaker and mechanically stirred for 20 min, 2.0 g of $Al(H_2PO_4)_3$ was added, and stirring was continued for 600 min to obtain the slurry of lithium-containing material with a core-shell structure. The obtained composite material had a particle size of 500 nm.

24.05 g of LiF and 25.95 g of $AlF_3$ were weighed and mixed in the planetary ball mill. 150 g of anhydrous ethanol was added as solvent for mixing. The zirconium balls used for ball milling were 3 mm zirconia balls, and the mass of the added milling balls was 500 g. The ball milling was carried out at the rotational speed of 450 r/min for 8 h. The slurry after the ball milling was dried in the drying oven at 120 °C for 8 h to obtain the precursor. After milling, the precursor was placed in a covered crucible and sintered in the muffle furnace at the temperature of 900 °C for 10 min. After the holding was completed, the crucible was taken out at high temperature and subjected to the quenching treatment via cold water spraying. After cooling to room temperature, the glassy $Li_3AlF_6$ material was obtained. The $Li_3AlF_6$ powder had a particle size of 150 nm.

The glassy $Li_3AlF_6$ materials prepared in multiple batches were milled and sieved through the 400-mesh sieve. 60 g of powder was added to the slurry of lithium-containing material with a core-shell structure obtained by stirring, and stirring was continued for 30 min. Then, 0.6 g of $Al_2O_3$ was added, and stirring was continued for 24 h to obtain the mixed slurry.

The mixed slurry was dried in the vacuum drying oven to obtain the core-shell glassy solid-state electrolyte, where the powder had a particle size D50 of 0.9 μm and a shell layer thickness of 30 nm. During the drying process, a vacuum environment was continuously maintained, and the drying was carried out at the temperature of 100 °C for 48 h.

The prepared core-shell glassy solid-state electrolyte powder was milled and sieved through the 400-mesh sieve. 18.4 g of commercial $LiCoO_2$ was added to 120 ml of anhydrous ethanol and ultrasonically dispersed for 35 min. Then, 1.84 g of the prepared solid-state electrolyte was added and mechanically stirred for 12 h. The well-stirred slurry was dried in the forced-air drying oven at 150 °C for 10 h. The dried powder was then sintered in the muffle furnace to obtain the positive electrode material coated with the core-shell glassy solid-state electrolyte, wherein the coating layer thickness was 1.0 μm, the sintering temperature was 250 °C, and the holding duration was 10 h.

**Example 5**

700 g of NMP as solvent was added to the sand mill. 300 g of commercial $LiAlPO_4(OH)_{0.2}F_{0.8}$ was weighed and added for sand milling. The milling balls used in the sand mill were zirconia balls with a diameter of 0.5 mm. The rotational speed of the sand mill was set to 1500 r/min, and the duration of the milling was 7 h. Subsequently, the slurry was added to the beaker and mechanically stirred for 30 min, then 10 g of $Al(H_2PO_4)_3$ was added, and stirring was continued for 400 min to obtain the slurry of lithium-containing material with a core-shell structure. The obtained composite material had a particle size of 200 nm.

24.05 g of LiF and 25.95 g of $AlF_3$ were weighed and mixed in the planetary ball mill. 150 g of anhydrous ethanol was added as solvent for mixing. The zirconium balls used for ball milling were 3 mm zirconia balls, and the mass of the added milling balls was 500 g. The ball milling was carried out at the rotational speed of 500 r/min for 6 h. The slurry after the ball milling was dried in the drying oven at 180 °C for 6 h to obtain the precursor. After milling, the precursor was placed in a covered crucible and sintered in the muffle furnace at the temperature of 800 °C for 30 min. After the holding was completed, the crucible was taken out at high temperature and subjected to the quenching treatment via cold water spraying. After cooling to room temperature, the glassy $Li_3AlF_6$ material was obtained. The $Li_3AlF_6$ powder had a particle size of 350 nm.

The glassy $Li_3AlF_6$ materials prepared in multiple batches were milled and sieved through the 400-mesh sieve. 100 g of powder was added to the slurry of lithium-containing material with a core-shell structure obtained by stirring and stirring was continued for 60 min. Then, 0.5 g of $SiO_2$ and 0.5 g of $Al_2O_3$ was added, and stirring was continued for 24 h to obtain the mixed slurry.

The mixed slurry was dried in the vacuum drying oven to obtain the core-shell glassy solid-state electrolyte, wherein the powder had a particle size D50 of 0.8 μm and a shell layer thickness of 30 nm. During the drying process, a vacuum environment was continuously maintained, and the drying was carried out at the temperature of 200 °C for 24 h.

The prepared core-shell glassy solid-state electrolyte powder was milled and sieved through the 400-mesh sieve. 18.5 g of commercial $LiCoO_2$ was added to 120 ml of NMP and ultrasonically dispersed for 60 min. Then, 1.5 g of the prepared solid-state electrolyte was added and mechanically stirred for 12 h. The well-stirred slurry was dried in the forced-air drying oven at 120 °C for 8 h. The dried powder was then sintered in the muffle furnace to obtain the positive electrode material coated with the core-shell glassy solid-state electrolyte, wherein the coating layer thickness was 1.0 $\mu$m, the sintering temperature was 200 °C, and the holding duration was 10 h.

**Example 6**

800 g of NMP as solvent was added to the sand mill. 200 g of commercial $LiAlPO_4(OH)_{0.8}F_{0.2}$ was weighed and added for sand milling. The milling balls used in the sand mill were zirconia balls with a diameter of 0.7 mm. The rotational speed of the sand mill was set to 600 r/min, and the duration of the milling was 9 h. Subsequently, the slurry was added to the beaker and mechanically stirred for 20 min, then 0.8 g of $Al(H_2PO_4)_3$ was added, and stirring was continued for 600 min to obtain the slurry of lithium-containing material with a core-shell structure. The obtained composite material had a particle size of 550 nm.

24.05 g of LiF and 25.95 g of $AlF_3$ were weighed and mixed in the planetary ball mill. 150 g of anhydrous ethanol was added as solvent for mixing. The zirconium balls used for ball milling were 3 mm zirconia balls, and the mass of the added milling balls was 500 g. The ball milling was carried out at the rotational speed of 450 r/min for 8 h. The slurry after the ball milling was dried in the drying oven at 120 °C for 8 h to obtain the precursor. After milling, the precursor was placed in a covered crucible and sintered in the muffle furnace at the temperature of 700 °C for 120 min. After the holding was completed, the crucible was taken out at high temperature and subjected to the quenching treatment via cold water spraying. After cooling to room temperature, the glassy $Li_3AlF_6$ material was obtained. The $Li_3AlF_6$ powder had a particle size of 350 nm.

The glassy $Li_3AlF_6$ materials prepared in multiple batches were milled and sieved through the 400-mesh sieve. 50 g of powder was added to the slurry of lithium-containing material with a core-shell structure obtained by stirring, and stirring was continued for 30 min. Then, 0.25 g of $Al_2O_3$ was added, and stirring was continued for 24 h to obtain the mixed slurry.

The mixed slurry was subjected to vacuum drying and de fluorination in the vacuum drying oven to obtain the core-shell glassy solid-state electrolyte, wherein the powder had a particle size D50 of 1.1 $\mu$m and a shell layer thickness of 30 nm. During the drying process, a vacuum environment was continuously maintained, and the drying was carried out at the temperature of 100 °C for 48 h.

The prepared core-shell glassy solid-state electrolyte powder was milled and sieved through the 400-mesh sieve. 18.4 g of commercial $LiCoO_2$ was added to 120 ml of NMP and ultrasonically dispersed for 340 min. Then, 1.5 g of the prepared solid-state electrolyte was added and mechanically stirred for 12 h. The well-stirred slurry was dried in the forced-air drying oven at 150 °C for 10 h. The dried powder was then sintered in the muffle furnace to obtain the positive electrode material coated with the core-shell glassy solid-state electrolyte, wherein the coating layer thickness was 1.2 $\mu$m, the sintering temperature was 400 °C, and the holding duration was 10 h.

**Example 7**

850 g of NMP as solvent was added to the sand mill. 325 g of commercial $LiAlPO_4(OH)_{0.5}F_{0.5}$ was weighed and added for sand milling. The milling balls used in the sand mill were zirconia balls with a diameter of 0.7 mm. The rotational speed of the sand mill was set to 2500 r/min, and the duration of the milling was 6 h. Subsequently, the slurry was added to the beaker and mechanically stirred for 30 min, then 20 g of $Al(H_2PO_4)_3$ was added, and stirring was continued for 600 min to obtain the slurry of lithium-containing material with a core-shell structure. The obtained composite material had a particle size of 200 nm.

24.05 g of LiF and 25.95 g of $AlF_3$ were weighed and mixed in the planetary ball mill. 150 g of anhydrous ethanol was added as solvent for mixing. The zirconium balls used for ball milling were 3 mm zirconia balls, and the mass of the added milling balls was 500 g. The ball milling was carried out at the rotational speed of 450 r/min for 8 h. The slurry after the ball milling was dried in the drying oven at 120 °C for 8 h to obtain the precursor. After milling, the precursor was placed in a covered crucible and sintered in the muffle furnace at the temperature of 900 °C for 60 min. After the holding was completed, the crucible was taken out at high temperature and subjected to the quenching treatment via cold water spraying. After cooling to room temperature, the glassy $Li_3AlF_6$ material was obtained. The $Li_3AlF_6$ powder had a particle size of 150 nm.

The glassy $Li_3AlF_6$ materials prepared in multiple batches were milled and sieved through the 400-mesh sieve. 80 g of powder was added to the slurry of lithium-containing material with a core-shell structure obtained by stirring, and stirring was continued for 30 min. Then, 0.4 of $Al_2O_3$ was added, and stirring was continued for 24 h to obtain the mixed slurry.

The mixed slurry was dried in the vacuum drying oven to obtain the core-shell glassy solid-state electrolyte, wherein the powder had a particle size D50 of 0.5 $\mu$m and a shell layer thickness of 50 nm. During the drying process, a vacuum environment was continuously maintained, and the drying was carried out at the temperature of 100 °C for 48 h.

The prepared core-shell glassy solid-state electrolyte powder was milled and sieved through the 400-mesh sieve. 18.4 g of commercial $LiCoO_2$ was added to 120 ml of anhydrous ethanol and ultrasonically dispersed for 35 min. Then, 1.84 g of the prepared solid-state electrolyte was added and mechanically stirred for 12 h. The well-stirred slurry was dried in the forced-air drying oven at 150 °C for 10 h. The dried powder was then sintered in the muffle furnace to obtain the positive electrode material coated with the core-shell glassy solid-state electrolyte, wherein the coating layer thickness was 0.7 $\mu$m, the sintering temperature was 400 °C, and the holding duration was 10 h.

**Comparative Example 1**

The solid-state electrolyte was prepared according to the method of Example 1, but without adding the "shell" structure $Al(H_2PO_4)_3$ material to $LiAlPO_4(OH)_{0.5}F_{0.5}$ nano-slurry. Therefore, the prepared solid-state electrolyte was $LiAlPO_4(OH)_{0.5}F_{0.5}$-glassy $Li_3AlF_6$ solid-state electrolyte. Subsequently, the $LiCoO_2$ positive electrode was coated according to the method of Example 1.

**Comparative Example 2**

The solid-state electrolyte was prepared according to the method of Example 1, but furnace cooling was performed during the preparation of $Li_3AlF_6$ solid-state electrolyte to obtain the core-shell $Li_3AlF_6$ solid-state electrolyte composed of $Li_3AlF_6$ material with good crystallinity, and subsequently, the $LiCoO_2$ positive electrode was coated according to the method of Example 1.

**Comparative Example 3**

The solid-state electrolyte was prepared according to the method of Example 1, but $SiO_2$ or/and $Al_2O_3$ additives were not added to the solid-state electrolyte slurry formed by mixing, and subsequently, the $LiCoO_2$ positive electrode was coated according to the method of Example 1.

**Comparative Example 4**

The glassy $Li_3AlF_6$ solid-state electrolyte was prepared according to the method of Example 1, and subsequently, the $LiCoO_2$ positive electrode was coated only with glassy $Li_3AlF_6$ according to the method of Example 1.

**Comparative Example 5**

The uncoated positive electrode material $LiCoO_2$, identical to that in Example 6, was selected and directly assembled into the coin cell to test according to the testing procedure in the present solution.

**Comparative Example 6**

Commercial $AlPO_4$ material was selected, and the positive electrode material $LiCoO_2$ was coated using the coating solution of Example 6.

**Experimental Example**

The coated positive electrodes prepared and obtained in the above were used as an active material of positive electrode material of the lithium-ion batteries, for the preparation of the lithium-ion batteries. The specific steps were as follows: each prepared active material of the positive electrode material of the lithium-ion batteries was mixed with conductive carbon black and polyvinylidene fluoride in a mass ratio of 8:1:1; a certain amount of N-methylpyrrolidone was added and the mixture was uniformly mixed to form the slurry; subsequently, the slurry was uniformly coated onto aluminum foil, dried, and punched into a 12 mm electrode plate; the electrode plate was dried in the vacuum drying oven at 120 °C for 12 h and stored in a glove box for later use; and the coin cell was assembled with the electrode plate as the positive electrode, a metal lithium sheet as the negative electrode, 1 M $LiPF_6$ mixed with ethylene carbonate (EC)/dimethyl carbonate (DMC) (v:v = 1:1) as liquid electrolytes, and a polypropylene (PP) as a separator. The assembled coin cell was subjected to electrochemical performance test at 25 °C within 3-4.6V. Initial discharge specific capacity test was conducted at a 0.1C rate. Capacity retention test was performed over 100 cycles at a 0.5C rate. Rate performance test was conducted using constant current charge-discharge at 0.5C and 5C.

Referring to Table 1, Table 1 lists the electrochemical test results of the examples and the comparative examples of the present invention.

Table 1

| | Initial charge-discharge capacity (mAh/g) @0.1C | Initial charge-discharge Coulombic efficiency (%) @0.1C | Initial charge-discharge capacity (mAh/g) @0.5C | Capacity retention after 100 cycles (%) @0.5C | Initial charge-discharge capacity (mAh/g) @5C |
|---|---|---|---|---|---|
| Example 1 | 223.6 | 92.3 | 195.6 | 86.5 | 114.5 |
| Example 2 | 220.4 | 91.0 | 193.4 | 87.3 | 117.2 |
| Example 3 | 219.1 | 90.3 | 193.1 | 88.6 | 114.0 |
| Example 4 | 224.0 | 92.6 | 196.2 | 86.3 | 112.4 |
| Example 5 | 222.0 | 91.8 | 194.3 | 87.9 | 119.5 |
| Example 6 | 219.8 | 90.6 | 193.6 | 86.9 | 118.4 |
| Example 7 | 218.5 | 90.0 | 192.3 | 88.1 | 118.2 |
| Comparative Example 1 | 190.4 | 86.4 | 163.3 | 65.4 | 60.4 |
| Comparative Example 2 | 191.3 | 84.6 | 159.6 | 70.3 | 71.9 |
| Comparative Example 3 | 189.5 | 86.3 | 158.2 | 68.4 | 72.7 |
| Comparative Example 4 | 183.3 | 85.1 | 164.2 | 72.3 | 67.0 |
| Comparative Example 5 | 160.0 | 70.9 | 132.3 | 58.2 | *55.5* |
| Comparative Example 6 | 192.7 | 84.3 | 160.1 | 71.8 | 70.3 |

The above provides a detailed description of a composite material and use thereof, a core-shell glassy solid-state electrolyte material, a preparation method therefor and use thereof, and a coated positive electrode material for a lithium-ion battery and a preparation method for the coated positive electrode material for the lithium-ion battery provided in the present invention. Specific examples are used herein to illustrate the principles and implementation modes of the present invention. The description of above embodiments is only for assisting in understanding the methods and core ideas, including the best mode, of the present invention, and also enable any person skilled in the art to practice the present invention, including manufacturing and using any device or system, and implementing any combined methods. It should be noted that those ordinarily skilled in the art, without departing from the principles of the present invention, could further make various improvements and modifications to the present invention, and these improvements and modifications also fall within the scope of protection of the claims of the present invention. The scope of protection of the disclosed patent application is defined by the claims and can include other embodiments that could be conceived by those skilled in the art. If the other embodiments have structural elements similar to the literal expression of the claims, or if they include equivalent structural elements that are not substantially different from the literal expression of the claims, then the other embodiments should also be included within the scope of the claims.

**INDUSTRIAL APPLICABILITY**

The present invention provides a composite material and use thereof, a core-shell glassy solid-state electrolyte material, a preparation method therefor and use thereof, and a coated positive electrode material for a lithium-ion battery and a preparation method for the coated positive electrode material for the lithium-ion battery. The core-shell glassy solid-state electrolyte material designed and prepared by the present invention can effectively improve surface properties of the positive electrode material, protect the positive electrode material from HF attack, inhibit transition metal dissolution of the positive electrode material, and ensure relatively good electrochemical performance of the positive electrode. In addition, the preparation method is simple and easy to implement, with mild conditions, strong controllability, and good stability, thus being easier for promotion and application in industrial production.

**Claims**

1. A composite material, **characterized by** comprising $LiAlPO_4(OH)_xF_{1-x}$ and $Al(H_2PO_4)_3$ compounded on a surface of the $LiAlPO_4(OH)_xF_{1-x}$, wherein

$$0 \leq x \leq 1.$$

2. The composite material according to claim 1, **characterized in that** the composite material has a core-shell structure, wherein

the $LiAlPO_4(OH)_xF_{1-x}$ is a core, and the $Al(H_2PO_4)_3$ is a shell layer;
a thickness of the $Al(H_2PO_4)_3$ shell layer is 10 nm~50 nm;
a particle size of the composite material is 80 nm~600 nm; and
a mass ratio of the $LiAlPO_4(OH)_xF_{1-x}$ to the $Al(H_2PO_4)_3$ is (30~65):(0.5~3).

3. Use of the composite material according to any one of claims 1 to 2 in a solid-state electrolyte material or a lithium-ion battery.

4. The use according to claim 3, **characterized in that** the solid-state electrolyte material comprises a fluorine-based solid-state electrolyte material, wherein

the fluorine-based solid-state electrolyte material comprises a glassy fluorine-based solid-state electrolyte material, wherein
the glassy fluorine-based solid-state electrolyte material comprises $Li_3AlF_6$.

5. A core-shell glassy solid-state electrolyte material, **characterized by**, calculated based on raw materials, comprising $Li_3AlF_6$ and a composite material compounded in the $Li_3AlF_6$, wherein
the composite material comprises the composite material according to any one of claims 1 to 2.

6. The core-shell glassy solid-state electrolyte material according to claim 5, **characterized in that** the $Li_3AlF_6$ is a matrix material in the core-shell glassy solid-state electrolyte material;

the composite material compounded in the $Li_3AlF_6$ is the composite material dispersed in the $Li_3AlF_6$;
a mass ratio of the $Li_3AlF_6$ to the $LiAlPO_4(OH)_xF_{1-x}$ in the composite material is (5~30):(30~65); and
the core-shell glassy solid-state electrolyte material comprises the core-shell glassy solid-state electrolyte material for a lithium-ion battery.

7. The core-shell glassy solid-state electrolyte material according to any one of claims 5 to 6, **characterized in that** the raw materials further comprise $SiO_2$ or/and $Al_2O_3$, wherein

the $SiO_2$ or/and $Al_2O_3$ is dispersed in the $Li_3AlF_6$;
a mass ratio of the $SiO_2$ or/and $Al_2O_3$ to the $Li_3AlF_6$ is (0.03~0.3):(5~30); and
the lithium-ion battery comprises a coating material for a positive electrode material of the lithium-ion battery.

8. A preparation method for the core-shell glassy solid-state electrolyte material according to any one of claims 5 to 7, **characterized by** comprising steps of:

1) mixing a $LiAlPO_4(OH)_xF_{1-x}$ slurry with the $Al(H_2PO_4)_3$ to obtain a slurry, wherein

$$0 \leq x \leq 1;$$

premixing LiF and $AlF_3$, followed by a first sintering to obtain a glassy $Li_3AlF_6$ material, and then milling the glassy $Li_3AlF_6$ material to obtain a glassy $Li_3AlF_6$ powder; and
2) remixing the glassy $Li_3AlF_6$ powder obtained in the above step, an $SiO_2$ or/and $Al_2O_3$ powder, and the slurry to obtain a mixed slurry; and then subjecting the mixed slurry to vacuum drying to obtain the core-shell glassy solid-state electrolyte material.

9. The preparation method according to claim 8, **characterized in that** the $LiAlPO_4(OH)_xF_{1-x}$ slurry is obtained by milling the $LiAlPO_4(OH)_xF_{1-x}$, wherein

a method of the milling comprises wet milling;
a rotational speed of the milling is 500 r/min~2500 r/min; and

a duration of the milling is 2 h~10 h.

10. The preparation method according to any one of claims 8 to 9, **characterized in that** a duration of the mixing is 30 min~600 min;

a molar ratio of the LiF to the AlF$_3$ is (3.0~3.3):1;
a method of the premixing comprises planetary ball mill mixing;
a duration of the premixing is 4 h~12 h; and
a rotational speed of the premixing is 200 r/min~500 r/min.

11. The preparation method according to any one of claims 8 to 10, **characterized by**, after the premixing, further comprising a step of drying, wherein

a temperature of the drying is 80 °C~200 °C;
a duration of the drying is 2 h~24 h;
a temperature of the first sintering is 600 °C~950 °C; and
a duration of the first sintering is 5 min~180 min.

12. The preparation method according to any one of claims 8 to 11, **characterized by**, after the first sintering, further comprising a step of quenching, wherein

a method of the quenching comprises water quenching or liquid nitrogen cooling; and
a particle size of the glassy Li$_3$AlF$_6$ powder is 100 nm~400 nm.

13. The preparation method according to any one of claims 8 to 12, **characterized in that** the remixing is first mixing the glassy Li$_3$AlF$_6$ powder and the slurry, and then further mixing with the SiO$_2$ or/and Al$_2$O$_3$ powder, wherein

a duration of the first mixing is 30 min~300 min;
a duration of the further mixing is 2 h~24 h;
a temperature of the vacuum drying is 100 °C~300 °C; and
a duration of the vacuum drying is 3 h~48 h.

14. Use of the core-shell glassy solid-state electrolyte material according to any one of claims 5 to 7 or the core-shell glassy solid-state electrolyte material prepared by the preparation method according to any one of claims 8 to 13 in a lithium-ion battery.

15. The use according to claim 14, **characterized in that** the lithium-ion battery comprises a positive electrode material of the lithium-ion battery; and
the use is as a coating material for the positive electrode material of the lithium-ion battery.

16. A coated positive electrode material for a lithium-ion battery, **characterized by** comprising a positive electrode material and a core-shell glassy solid-state electrolyte material coated on the positive electrode material, wherein the core-shell glassy solid-state electrolyte material comprises the core-shell glassy solid-state electrolyte material according to any one of claims 5-7 or the core-shell glassy solid-state electrolyte material prepared by the preparation method according to any one of claims 8 to 13.

17. The coated positive electrode material for the lithium-ion battery according to claim 16, **characterized in that** a mass ratio of the positive electrode material to the core-shell glassy solid-state electrolyte material is 1:(0.02~0.15); and
a coating layer thickness of the core-shell glassy solid-state electrolyte material is 0.6 $\mu$m~1.2 $\mu$m.

18. A preparation method for a coated positive electrode material for a lithium-ion battery, **characterized by** comprising steps of:

mixing a positive electrode material, a milled core-shell glassy solid-state electrolyte material, and a solvent, followed by a second sintering, to obtain the coated positive electrode material coated with a core-shell glassy solid-state electrolyte; and
the core-shell glassy solid-state electrolyte material comprises the core-shell glassy solid-state electrolyte material according to any one of claims 5 to 7 or the core-shell glassy solid-state electrolyte material prepared by the preparation method according to any one of claims 8 to 13.

19. The preparation method according to claim 18, **characterized in that** the milled core-shell glassy solid-state electrolyte material has a powder particle size D50 of 0.4 $\mu$m~1.0 $\mu$m;

steps of the mixing are: first subjecting the positive electrode material and the solvent to ultrasonic stirring and dispersion, and then adding the milled core-shell glassy solid-state electrolyte material, followed by stirring and mixing;
the solvent comprises anhydrous ethanol and/or N-methylpyrrolidone;
a duration of the ultrasonic stirring and dispersion is 20 min~120 min; and
a duration of the stirring and mixing is 2 h~24 h.

20. The preparation method according to any one of claims 18 to 19, **characterized by**, after the mixing, further comprising a step of drying, wherein

a temperature of the drying is 80 °C~200 °C;
a duration of the drying is 2 h~12 h;
a temperature of the second sintering is 200 °C~400 °C; and
a holding duration of the second sintering is 2 h~12 h.

**FIG. 1**

**FIG. 2**

## INTERNATIONAL SEARCH REPORT

| International application No. |
| --- |
| **PCT/CN2024/093039** |

| A. | CLASSIFICATION OF SUBJECT MATTER |
| --- | --- |

C04B28/34(2006.01)i; H01M10/0562(2010.01)i; H01M10/058(2010.01)i; H01M4/62(2006.01)i; H01M10/0525(2010.01)i; C04B40/02(2006.01)i; C04B111/94(2006.01)i

According to International Patent Classification (IPC) or to both national classification and IPC

| B. | FIELDS SEARCHED |
| --- | --- |

Minimum documentation searched (classification system followed by classification symbols)

IPC: C04B，H01M

Documentation searched other than minimum documentation to the extent that such documents are included in the fields searched

Electronic data base consulted during the international search (name of data base and, where practicable, search terms used)

CNABS, CNTXT, VEN, ENTXT, CNKI, ELSEVIER: 核壳结构, 电池, 电解质, 玻璃态, 六氟铝酸锂, 磷酸二氢铝, Li3AlF6, Al(H2PO4)3, core-shell structure, battery, electrolyte, glassy state, lithium hexafluoroaluminate, aluminum dihydrogen phosphate

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116396052 A (LIONGO (CHANGZHOU) NEW ENERGY CO., LTD.) 07 July 2023 (2023-07-07)<br>claims 1-20, and description, paragraphs 7-26 | 1-20 |
| Y | CN 112582682 A (CHENGDU NEW KELI CHEMICAL TECHNOLOGY CO., LTD.) 30 March 2021 (2021-03-30)<br>description, paragraphs 9 and 22 | 1-3 |
| Y | CN 112054167 A (ADVANCED LITHIUM ELECTROCHEMISTRY CO., LTD.) 08 December 2020 (2020-12-08)<br>description, paragraphs 8-9 | 1-3 |
| A | CN 104953175 A (BYD CO., LTD.) 30 September 2015 (2015-09-30)<br>entire document | 1-20 |
| A | CN 110911736 A (BYD CO., LTD.) 24 March 2020 (2020-03-24)<br>entire document | 1-20 |
| A | KR 20220123179 A (OH, YOU KEUN) 06 September 2022 (2022-09-06)<br>entire document | 1-20 |

☑ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **23 August 2024** | **24 August 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/093039** |

**C.     DOCUMENTS CONSIDERED TO BE RELEVANT**

| Category* | Citation of document, with indication, where appropriate, of the relevant passages | Relevant to claim No. |
| --- | --- | --- |
| A | WO 2017128983 A1 (BYD CO., LTD.) 03 August 2017 (2017-08-03)<br>entire document | 1-20 |

Form PCT/ISA/210 (second sheet) (July 2022)

## INTERNATIONAL SEARCH REPORT
### Information on patent family members

| International application No. |
| --- |
| **PCT/CN2024/093039** |

| Patent document cited in search report | | | Publication date (day/month/year) | Patent family member(s) | | | Publication date (day/month/year) |
| --- | --- | --- | --- | --- | --- | --- | --- |
| CN | 116396052 | A | 07 July 2023 | CN | 116396052 | B | 22 September 2023 |
| CN | 112582682 | A | 30 March 2021 | None | | | |
| CN | 112054167 | A | 08 December 2020 | None | | | |
| CN | 104953175 | A | 30 September 2015 | KR | 20160113183 | A | 28 September 2016 |
| | | | | KR | 101889350 | B1 | 17 August 2018 |
| | | | | JP | 2017518622 | A | 06 July 2017 |
| | | | | JP | 6340133 | B2 | 06 June 2018 |
| | | | | US | 2016359193 | A1 | 08 December 2016 |
| | | | | US | 9893379 | B2 | 13 February 2018 |
| | | | | EP | 3080860 | A1 | 19 October 2016 |
| | | | | EP | 3080860 | A4 | 01 February 2017 |
| | | | | EP | 3080860 | B1 | 11 November 2020 |
| | | | | WO | 2015144074 | A1 | 01 October 2015 |
| CN | 110911736 | A | 24 March 2020 | None | | | |
| KR | 20220123179 | A | 06 September 2022 | None | | | |
| WO | 2017128983 | A1 | 03 August 2017 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310656074X